Europäisches Patentamt

European Patent Office

Office européen des brevets

(19)

(11) Veröffentlichungsnummer: **0 553 316 B1**

(12) # EUROPÄISCHE PATENTSCHRIFT

(45) Veröffentlichungstag der Patentschrift: **01.03.95**

(51) Int. Cl.6: **F16B** **19/05**, B21J 15/02

(21) Anmeldenummer: **92915531.5**

(22) Anmeldetag: **15.07.92**

(86) Internationale Anmeldenummer:
**PCT/EP92/01604**

(87) Internationale Veröffentlichungsnummer:
**WO 93/03282 (18.02.93 93/05)**

(54) **AUF EINEN PASSNIET AUFZUFORMENDER SCHLIESSRING SOWIE WERKZEUG DAFÜR.**

(30) Priorität: **26.07.91 DE 4124787**

(43) Veröffentlichungstag der Anmeldung:
**04.08.93 Patentblatt 93/31**

(45) Bekanntmachung des Hinweises auf die
Patenterteilung:
**01.03.95 Patentblatt 95/09**

(84) Benannte Vertragsstaaten:
**AT BE CH DE DK ES FR GB GR IT LI LU MC
NL SE**

(56) Entgegenhaltungen:
BE-A- 679 893       CH-A- 358 991
DE-A- 2 046 067     DE-A- 3 025 676
DE-A- 3 215 228     US-A- 2 542 376

(73) Patentinhaber: **HUCK INTERNATIONAL GmbH
& CO.**
**An der unteren Söse 26**
**W-3360 Osterode (DE)**

(72) Erfinder: **MAGES, Walter**
**Porchestr. 20**
**D-6320 Alsfeld 1 (DE)**
Erfinder: **TURLACH, Gerhard**
**Am Butterberg 24**
**D-3360 Osterode (DE)**

(74) Vertreter: **Rehberg, Elmar, Dipl.-Ing.**
**Patentanwalt**
**Postfach 31 62**
**D-37021 Göttingen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Schließring zur Erstellung einer hochbeanspruchbaren Nietverbindung, der mit einem Werkzeug auf einen Vertiefungen aufweisenden Schließteil eines mit einem Abreißteil versehenen Paßniets unter Anwendung einer Axialspannung beim Abreißen des Abreißteils aufformbar ist, im wesentlichen die Form eines Hohlzylinders aufweist und von dem beim Aufformen Material in die Vertiefungen des Schließteils einfließt. Die Erfindung zeigt auch ein Werkzeug für das unter Anwendung einer Axialspannung beim Abreißen eines Abreißteils erfolgende Aufformen eines Schließrings auf einen Vertiefungen aufweisenden Schließteil eines Paßniets zur Erstellung einer hochbeanspruchbaren Nietverbindung, mit einem Zangenteil zum Ergreifen des Abreißteils des Paßniets und einem Setzkopf, der mit dem Schließring in Wirkverbindung tritt. Eine Paßnietverbindung besteht in aller Regel aus einem Paßniet und einem Schließring. Der Paßniet weist einen Schaft auf, der an seinem einen Ende einen Kopf trägt und in seinem anderen Endbereich in einen Schließteil sowie einen sich anschließenden Abreißteil übergeht. Zwischen Schließteil und Abreißteil ist eine Abreißrille vorgesehen. Der Schließring tritt bei seinem Aufformen mit dem Schließteil des Paßniets in Wirkverbindung. Er weist die Form eines Hohlzylinders auf und wird beim Aufformen durch eine Verformung und Kaltverfestigung in eine solche Form überführt, daß sein Material zumindest teilweise in die Vertiefungen im Schließteil des Paßniets einfließt.

Ein Schließring der eingangs beschriebenen Art ist aus der DE-PS 32 15 228, der DE-OS 30 25 676 oder auch der US-PS 3 915 053 bekannt. Der Schließring weist jeweils im wesentlichen die Form eines Hohlzylinders auf, dessen axiale Lange auf die axiale Länge des Schließteils des zugehörigen Paßniets abgestimmt ist. In den Stirnbereichen kann der Schließring abgerundet oder mit einer Fase versehen sein, die der erleichterten Handhabung dient. Beim Aufformen des Schließrings auf den Schließteil des Paßniets wird bekanntermaßen ein Werkzeug eingesetzt, welches einen Zangenteil und einen Setzkopf besitzt. Der Zangenteil ergreift das Abreißteil des Paßniets und über den Setzkopf wird der Schließring plastisch verformt. Der Schließring steht während seiner Verformung unter Einwirkung einer Axialkraft, und zwar einer Druckkraft, die im Schließring Axialspannungen hervorruft, die letztlich zu der Verformung führen. Es sind hohe Verformungskräfte und Axialspannungen erforderlich, um den Schließring in der gewünschten Weise fließen zu lassen. Dabei kommt es insbesondere darauf an, daß das Material des Schließrings die Vertiefungen im Schließteil des Paßniets möglichst weitgehend oder sogar vollständig ausfüllt. Dies geschieht in Abhängigkeit zu der besonderen Formgebung und Anordnung der Vertiefungen im Schließteil des Schafts des Paßniets.

Die für die Verformung des Schließrings erforderlichen Axialspannungen und die zugehörigen axial wirkenden Verformungskräfte sind sehr groß. Je größer sie sind, desto leichter und vollständiger erfolgt die Verformung des Schließrings. Die Verformungskräfte stützen sich jedoch als axial wirkende Kräfte am Kopf des Paßniets an dem betreffenden Bauteil ab. Da der Kopf eines Paßniets in vielen Fällen relativ klein gestaltet ist, ist die übertragbare Kraft begrenzt. Wird diese Kraft überschritten, erfolgt ein Abriß des Kopfs. Für ein gutes Fließen des Werkstoffs des Schließrings sind hohe Verformungskräfte und Axialspannungen erforderlich. Werden niedrigere Axialkräfte und entsprechend niedrigere Spannungen angewendet, werden die Vertiefungen im Schließteil des Paßniets durch den Schließring nur unvollständig ausgefüllt. Dann ist in der Folge die Beanspruchbarkeit der Nietverbindung auch entsprechend niedriger.

Der Erfindung liegt die Aufgabe zugrunde, einen Schließring der eingangs beschriebenen Art aufzuzeigen und/oder ein Werkzeug zu schaffen, bei deren Anwendung ein erleichtertes Fließen des Werkstoffs des Schließrings in die Vertiefungen des Schließteils des Paßniets eintritt.

Erfindungsgemäß wird dies bei dem Schließring der eingangs beschriebenen Art dadurch erreicht, daß er auf mindestens einem Teil der äußeren und/oder inneren Oberfläche seines Hohlzylinders und/oder im Bereich einer oder beider Stirnflächen Rippen aufweist und damit eine von der Rotationssymmetrie abweichende Formgebung in der Weise besitzt, daß sich bei der Aufformung des Schließrings auf den Schließteil des Paßniets der Axialspannung eine Torsionsspannung überlagert, so daß Material des Schließrings durch das gleichzeitige Einwirken der Axialspannung und der Torsionsspannung in die Vertiefungen des Schließteils einfließt. Der Schließring ist also nicht mehr rotationssymmetrisch, wie bisher, ausgebildet, sondern besitzt eine Gestaltung, die beim Aufformen eine Drehbewegung des Schließrings um seine Achse initiiert, so daß zusätzlich zu der einwirkenden Axialspannung auch eine Torsionsspannung entsteht bzw. überlagert wird. Die Erfindung wendet damit die Hypothese der größten Gestaltänderungsarbeit, die in anderem Zusammenhang bekannt ist, auch auf die Verbindung des Aufformens eines Schließrings auf einen Paßniet an. Es ergibt sich gegenüber der reinen Axialspannung, wie sie für die Gestaltänderung im Stand der Technik erforderlich ist, eine reduzierte Axialspannung $\sigma_D$ nach der Formel

$$\sigma_v = \sqrt{\sigma_D^2 + (a \cdot b \cdot \tau^2)} \,.$$

Dabei ist $\sigma_v$ die Vergleichsspannung, $\sigma_D$ die Axialspannung (Druckspannung), a und b Werkstofffaktoren und $\tau$ die Torsionsspannung (Schubspannung). Durch das gleichzeitige Einwirken der Axialspannung und der Torsionsspannung fließt der Werkstoff des Schließrings besser in die Vertiefungen des Schließteils des Paßniets beim Aufformvorgang, und zwar bei einer reduzierten Axialspannung. Die Vertiefungen im Schließteil des Paßniets werden damit besser ausgeformt. Somit ergibt sich eine höherbeanspruchbare Nietverbindung. So weist der Schließring auf mindestens einem Teil der äußeren und/oder inneren Oberfläche seines Hohlzylinders und/oder auch im Bereich einer oder beider Stirnflächen Rippen aufweisen. Diese Rippen wirken wie auf Druck beanspruchte Stäbe, die bei einer bestimmten Druckbeanspruchung ausknicken und dadurch die Drehbewegung verursachen. Die Rippen können parallel zur Achse des Schließrings angeordnet sein, so daß sich je nach Ausknickvorgang eine unterschiedliche Drehrichtung ergeben kann. Es ist aber auch möglich, durch eine Schräglage der Rippen die Drehrichtung vorzubestimmen. So können die Rippen beispielsweise in Form eines Steilgewindes und/oder mit asymmetrischem Querschnitt vorgesehen sein. Ein Steilgewinde eignet sich insbesondere im Bereich der äußeren oder inneren Mantelfläche des Hohlzylinders. Ein asymmetrischer Querschnitt wird sinnvoll im Bereich der Stirnflächen des Hohlzylinders des Schließrings angewendet. Von besonderer Bedeutung ist die Anordnung von Rippen auf der inneren Oberfläche des Hohlzylinders, also dort, wo das Material des Schließrings am meisten fließen muß, wenn es sich in die Vertiefungen des Schließteils des Paßniets einformt. Die Torsionsspannungen werden daher bei dieser Ausführungsform gezielt an dieser Stelle eingebracht.

Die Torsionsspannung kann dadurch gesteigert werde, daß zwei Oberflächen des Schließrings jeweils mit Rippen versehen sind, die so angeordnet sind, daß beide induzierte Torsionsspannungen dieselbe Drehrichtung haben. Dies gilt insbesondere für die Anordnung von Rippen auf den beiden Mantelflächen des Schließrings. Hierdurch entsteht beim Aufformen des Schließrings eine besonders starke Verdrehung.

Die Steigerung der Torsionsspannung kann aber auch durch die entgegengesetzte Ausbildung erzielt werden, nämlich dadurch, daß zwei Oberflächen des Schließrings mit Rippen versehen sind, die so angeordnet sind, daß beide induzierte Torsionsspannungen entgegengesetzte Drehrichtungen besitzen. Diese Ausführungsform bezieht sich insbesondere auf die Anordnung von Rippen im Bereich der Stirnflächen des Schließrings. Wenn die beiden Stirnflächen des Schließrings in entgegengesetzte Richtungen zueinander verdreht werden, entsteht hier eine besonders starke Verdrehung und es resultiert eine besonders hohe induzierte Torsionsspannung.

Der prinzipielle Gedanke der vorliegenden Erfindung, nämlich die Anwendung der Hypothese der größten Gestaltänderungsarbeit auf eine Paßniet/Schließringverbindung läßt sich auch durch besondere Ausbildung des Werkzeugs für das Aufformen des Schließrings erreichen. Auch die kombinierte Anwendung ist möglich, nämlich die besondere Ausbildung des Schließrings selbst und zusätzlich die entsprechende Ausbildung des Werkzeugs. Zur Vereinfachung sei im Folgenden jedoch nur die Ausbildung des Werkzeugs beschrieben. Die Torsionsspannung wird in allen Fällen dabei durch eine Zwangsform im Werkzeug oder durch Reibschluß in den Schließring eingeleitet.

Das gattungsgemäße Werkzeug kennzeichnet sich erfindungsgemäß dadurch, daß es eine von der Rotationssymmetrie abweichende Formgebung in der Weise besitzt, daß der Setzkopf im Schließring zumindest auf einem Teil seiner Axialbewegung vom Zangenteil über eine Drehbewegung zusätzlich eine Torsionsspannung induziert, so daß Material des Schließrings durch das gleichzeitige Einwirken der Axialspannung und der Torsionsspannung in die Vertiefungen des Schließteils fließt. Auch dabei wird die oben angegebene Formel benutzt, wobei zusätzlich der Vorteil eintritt, daß die die Torsionsspannung induzierende Drehbewegung seitens des Werkzeugs aufgebracht werden kann. Dies entlastet den Kopf des Paßniets und die Gefahr des Abreißens des Kopfs des Paßniets wird reduziert, weil die auf den Kopf einwirkende Axialkraft vergleichsweise reduziert ist.

Im Einzelnen können der Setzkopf und der Zangenteil vermittels eines Gewindes, einer Schrägnut o. dgl. aneinander geführt sein, wobei die Steigung und die sonstigen Parameter so gewählt sind, daß keine Selbsthemmung eintritt. Über dieses Gewinde, die Schrägnut o. dgl. wird dann die Drehbewegung eingeleitet und die Torsionsspannung induziert. Unter den sonstigen Parametern sind die unterschiedlichen Werkstoffpaarungen und die Eigenschaften der Werkstoffe zu verstehen, insbesondere die unterschiedlichen Reibverhältnisse.

Der Setzkopf des Werkzeugs kann in seiner Kontaktfläche zum Schließring vorstehende Rippen und/oder Vertiefungen aufweisen. Die Rippen formen sich bei dem Aufformen des Schließrings in das Material des Schließrings ein, während umgekehrt das Material des Schließrings in die Vertiefungen im Setzkopf eindringen kann, so daß gleichsam eine Verzahnung der beiden Teile zueinander eintritt. Über diese Verzahnung kann sehr wirksam eine Drehbewegung aufgebracht und dabei eine Torsionsspannung induziert werden.

Die Rippen und/oder Vertiefungen können parallel oder schräg zur Achse des Setzkopfs angeordnet sein. Bei paralleler Anordnung muß in sonstiger Weise eine Drehbewegung auf das Werkzeug ausgeübt werden. Bei Schräganordnung kann die Drehbewegung aus einer Axialbewegung abgeleitet werden.

Das Werkzeug kann einen stetig oder auch pulsierend einwirkenden Antrieb aufweisen. Unter einem pulsierenden Antrieb wird ein Antrieb nach Art eines Hämmerns auf den Schließring verstanden, während bei einem stetigen Antrieb eine sich in ihrer Größe zwar ändernde, jedoch stetig vorhandene Kraft verstanden wird. Das Werkzeug kann rein axial oder auch drehend angetrieben werden.

Die Erfindung wird anhand der beiliegenden Zeichnungen weiter erläutert und beschrieben. Es zeigen:

Figur 1    die Darstellung eines Paßniets mit aufgeformtem Schließring und Werkzeug unmittelbar am Ende des Aufformungsvorgangs, teilweise geschnitten,

Figur 2    zwei Halbschnitte wesentlicher Teile des Paßniets, des Schließrings und des Werkzeugs zu Beginn und zum Ende des Aufformungsvorgangs,

Figur 3    die Darstellung des aufgeformten Schließrings auf einen Paßniet, teilweise geschnitten,

Figur 4    eine Seitenansicht eines erfindungsgemäß ausgebildeten Schließrings,

Figur 5    einen Schnitt gemäß der Linie V-V in Figur 4,

Figur 6    eine Seitenansicht des Schließrings in einer weiteren Ausführungsform,

Figur 7    eine weitere Ausführungsform des Schließrings,

Figur 8    die Ausbildung eines Schließrings, abgewickelt in die Ebene,

Figur 9    einen Detailausschnitt aus einem Setzkopf des Werkzeugs und

Figur 10   ein Diagramm der Druckkraft über dem Weg der Verformung.

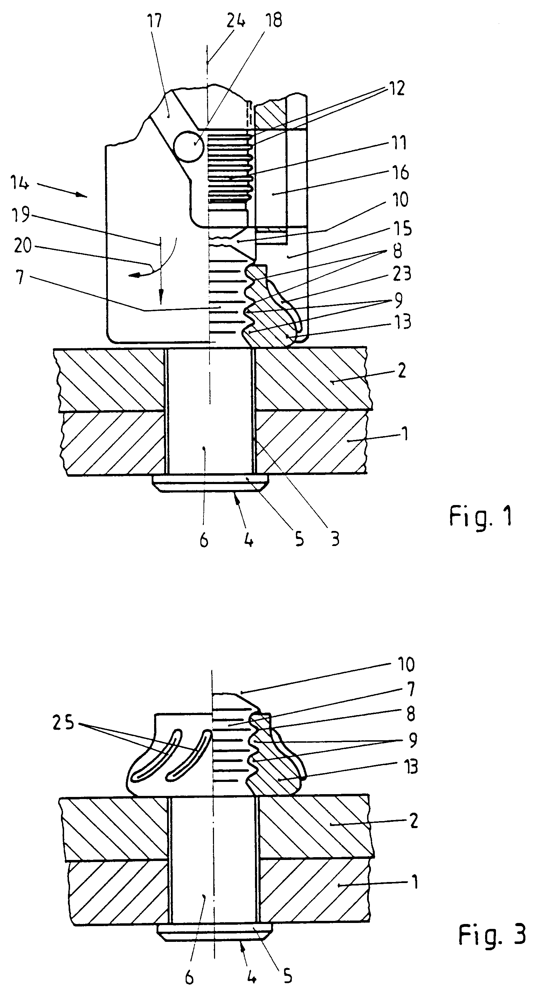

In Figur 1 sind für die Erfindung wesentliche Teile verdeutlicht. Die hochbeanspruchbare Nietverbindung soll zwei Bauteile 1 und 2, beispielsweise zwei Bleche, zusammenhalten. Beide Bauteile 1 und 2 besitzen eine fluchtende Bohrung 3, durch die ein Paßniet 4 so hindurchgesteckt ist, daß sein Kopf 5 auf der freien Oberfläche des Bauteils 1 aufliegt. Der Paßniet 4 besitzt ansonsten einen Schaft 6, der sich zunächst durch die beiden Bauteile 1 und 2 hindurch erstreckt und sodann in einen Schließteil 7 übergeht, der auf seinem Umfang mit umlaufenden Vorsprüngen 8 und dazwischen angeordneten umlaufenden Vertiefungen 9 versehen ist. Über eine sich in axialer Richtung anschließende Abrißrille 10 besitzt der Schaft schließlich ein Abreißteil 11, welches auf seinem Umfang ebenfalls mit umlaufenden Rippen 12 versehen ist.

Dem Paßniet 4 ist ein Schließring 13 zugeordnet, der im Ausgangszustand, also unverformt, etwa die Gestalt eines Hohlzylinders besitzt und insoweit zwei Mantelflächen und zwei Stirnflächen aufweist. In Figur 1 ist der Schließrng 13 bereits in verformtem Zustand dargestellt, und zwar am Ende des Aufformungsvorgangs, bei dem das Abreißteil 11 des Schafts 6 gerade an der Abrißrille 10 abgerissen ist.

Für das Aufformen des Schließrings 13 auf dem Schließteil 7 des Paßniets 4 ist ein Werkzeug 14 vorgesehen, welches als wesentliche Elemente einen Setzkopf 15 und ein Zangenteil 16 besitzt. Das Zangenteil 16 ist meist geteilt ausgebildet und besitzt zwei Backen, die eine den Rippen 12 entsprechende Formgebung aufweisen, so daß das Zangenteil 16 an dem Abreißteil 11 angreifen kann. Setzkopf 15 und Zangenteil 16 sind aneinander mit einer Schrägnut 17 und einem Bolzen 18 geführt. Die Schrägnut 17 kann im Setzkopf 15 angeordnet sein, während der Bolzen 18 am Zangenteil 16 angeordnet. Selbstverständlich kann die Anordnung auch umgekehrt sein. Wichtig ist, daß über die Schrägnut 17 der Setzkopf 15 letztlich nicht nur eine axiale Druckverformung auf den Schließring 13 gemäß Pfeil 19 ausübt, sondern daß gemäß Pfeil 20 eine zusätzliche Drehbewegung überlagert wird. Damit entsteht bei der Verformung des Schließrings 13 in diesem eine Axialspannung, der eine Torsionsspannung überlagert ist. Damit fließt der Werkstoff des Schließrings 13 nach der Hypothese der maximalen Gestaltänderungsarbeit leichter und schneller bei seinem Aufformen in die Vertiefungen 9 des Schließteils 7 des Paßniets 4 ein, so daß der Querschnitt der Vertiefungen besser ausgefüllt wird. Obwohl die Verformung des Schließrings 13 bei einer im Vergleich zum Stand der Technik reduzierten Axialspannung erfolgt, wird durch die Überlagerung der Axialspannung mit der Torsionsspannung das Fließen des Werkstoffs des Schließrings 13 begünstigt und es erfolgt letztlich bei einer reduzierten Vergleichsspannung. Die die Torsionsspannung induzierende Drehbewegung kann, wie hier, von der Axialbewegung der Teile zueinander abgeleitet werden. Es ist aber auch möglich, das Werkzeug 14 selbst zu drehen und auf diese Art und Weise eine zusätzliche Torsionsspannung zu induzieren.

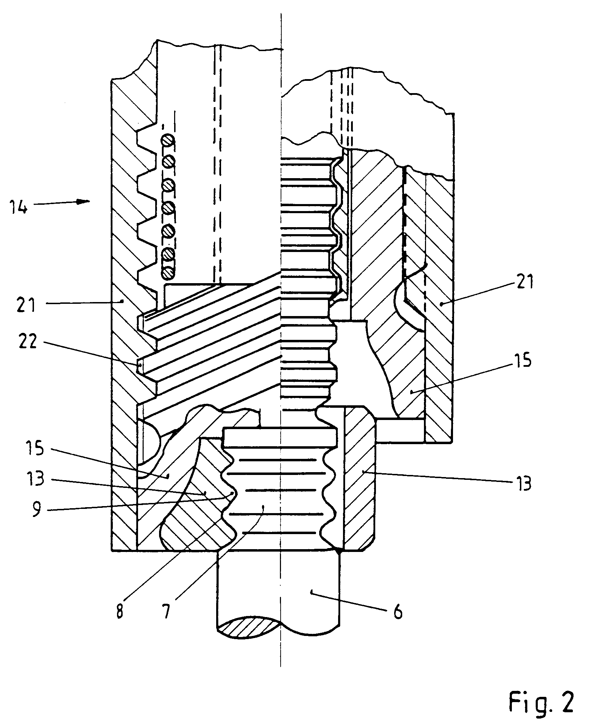

Figur 2 zeigt einen Querschnitt durch das Werkzeug 14, welches ein Gehäuse 21 aufweist, in welchem der Setzkopf 15 mit Hilfe eines Gewindes 22 verdrehbar ist. Die Steigung des Gewindes 22 und die sonstigen Verhältnisse sind so gewählt, daß beim Aufformen keine Selbsthemmung eintritt. Die Funktion des Gewindes 22 der Figur 2 entspricht der Funktion der Schrägnut 17 bei der Ausführungsform des Werkzeugs 14 gemäß Figur 1.

Der rechte Halbschnitt in Figur 2 zeigt die Relativlage der Teile zu Beginn des Aufformens des Schließrings 13, während der linke Halbschnitt die Verhältnisse am Ende des Aufformungsvorgangs wiedergibt.

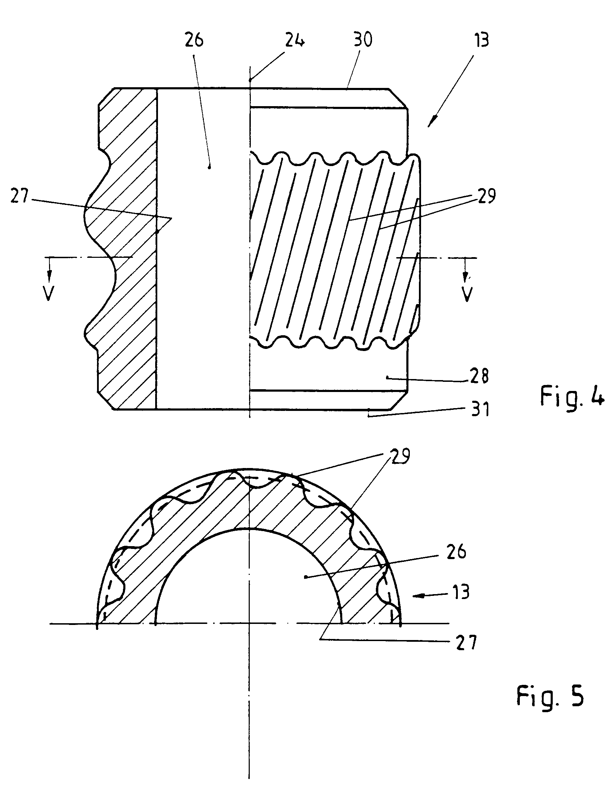

Figur 3 zeigt im wesentlichen einen Schließring 13 nach seiner Verformung. Das dabei eingesetzte Werkzeug 14 (Figur 1) besitzt im Bereich des Setzkopfs 15 an der Kontaktfläche zu dem Schließring 13 Vertiefungen 23, die schrägstehend zur Achse 24 des Werkzeugs 14 bzw. des Paßniets 4 angeordnet sind, so daß sich das Material des SchließringS 13 nicht nur in die Vertiefungen 9 einformt, sondern auf dem äußeren Umfang des Schließrings 13 schrägstehende Rippen 25 entstehen, mit deren Hilfe bei einer Axialbewegung des Setzkopfs 15 eine Drehbewegung überlagert wird, die sich wiederum in der zusätzlich zur Axialspannung induzierten Torsionsspannung äußert. Die Figuren 1 bis 3 verdeutlichen ein Beispiel, bei welchem die Erfindung an dem Werkzeug 14 verwirklicht ist. Der dabei eingesetzte Schließring 13 kann als rotationssymmetrischer Hohlkörper eingesetzt werden, wie er im Stand der Technik bekannt ist und in Figur 2, rechter Halbschnitt, dargestellt ist.

Es ist aber auch möglich, die Erfindung an dem Schließring 13 durchzuführen und diesen Schließring 13 erfindungsgemäß auszubilden. Ein Ausführungsbeispiel zeigen die Figuren 4 und 5. Der Schließring 13 ist zunächst als Hohlzylinder ausgebildet, d. h. er besitzt eine Ausnehmung 26 mit einer inneren rotationssymmetrischen Oberfläche 27. Auf seiner äußeren Oberfläche 28 besitzt der Schließring 13 in einem mittleren Abschnitt vorstehende Rippen 29, die in Schräganordnung zu der Achse 24 vorgesehen sind. Diese Rippen 29 wirken bei Druckbeanspruchung in Richtung der Achse 24 wie Stäbe, die sich derart verformen, daß eine Drehbewegung und damit eine Torsionsspannung zusätzlich zu der einwirkenden Axialspannung auf den Schließring 13 induziert wird. Hieraus ergibt sich dann die reduzierte Vergleichsspannung.

Der Schließring 13 gemäß den Figuren 4 und 5 besitzt noch zwei Stirnflächen 30 und 31, die glatt, wie bisher, ausgebildet sind und insoweit zur Torsionsspannung nichts beitragen.

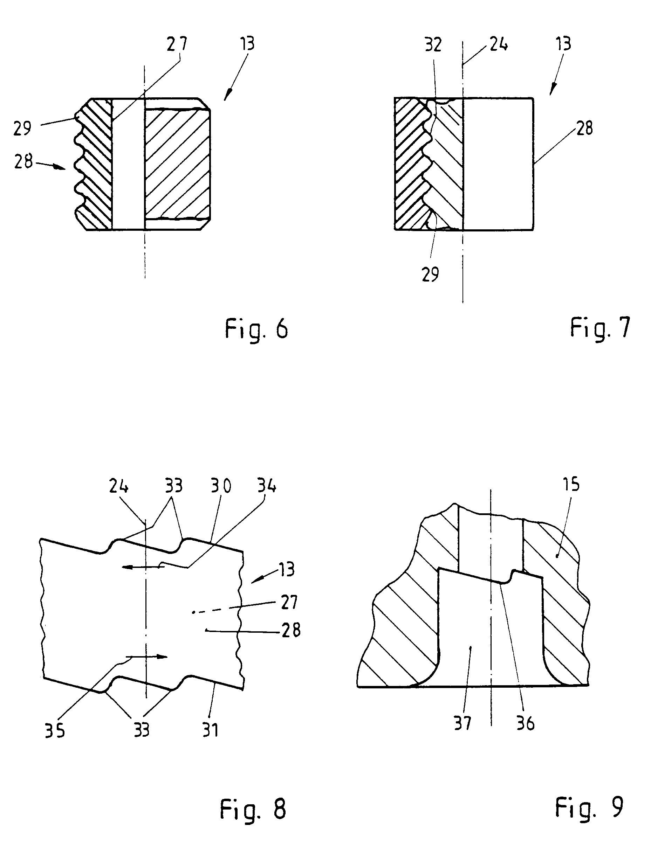

Figur 6 zeigt eine weitere Ausführungsform des Schließrings 13 mit Rippen 29 in Schräganordnung im Bereich der äußeren Oberfläche 28. Die innere Oberfläche 27 ist in Form einer zylindrischen Mantelfläche vorgesehen.

Figur 7 zeigt dagegen die Ausbildung der inneren Oberfläche 27 mit Rippen 32. Die Rippen 32 sind dort angeordnet, wo das Material des Schließrings 13 die größte Verformung durchmachen muß. Hier muß es nämlich in die Vertiefungen 9 zwischen den Vorsprüngen 8 in das Schließteil 7 des Paßniets 4 eindringen. Die größte Torsionsspannung wird gezielt an dieser Stelle ausgeübt, wodurch sich ein besonders leichtes und frühes Einfließen des Materials in die Vertiefungen 9 ergibt.

Die Ausführungsformen der Figuren 6 und 7 können getrennt voneinander oder aber auch gemeinsam an einem Schließring 13 verwirklicht werden. Die Schräglage der Rippen 29 und 32 stimmt dabei zweckmäßig überein, so daß die Drehbewegung, die durch beide Rippen 29 und 32 bewirkt wird, in der Drehrichtung übereinstimmt und insoweit die Torsionsspannung verstärkt wird.

Figur 8 zeigt eine weitere Ausführungsform eines Schließrings 13 anhand eines Teils dieses Schließrings 13, in die Ebene abgewickelt. Die Erfindung ist hier nicht im Bereich der Oberflächen 27 und 28, sondern im Bereich der Stirnflächen 30 und 31 verwirklicht. Hier ist eine Art Verzahnung 33 mit asymmetrischem Querschnitt verwirklicht, wobei die Asymmetrie entgegengesetzt angeordnet ist, so daß bei Druckbeanspruchung in Richtung der Achse 24 im Bereich der oberen Stirnfläche 30 eine Drehbewegung in Richtung des Pfeils 34 induziert wird, während im unteren Bereich des Schließrings 13 durch die Gestaltung der Stirnfläche 31 eine Drehbewegung gemäß Pfeil 35 induziert wird. Die Pfeile 34 und 35 sind einander entgegengerichtet, so daß insgesamt die Verdrehung des Schließrings 13 in sich verstärkt und insoweit eine besonders hohe Torsionsspannung zur Überlagerung mit der Axialspannung gebracht wird.

Die Ausbildung gemäß Figur 8 ist am unverformten Schließring 13 bereits verwirklicht. Es ist aber auch möglich, einen hohlzylindrischen Schließring 13 in Verbindung mit einem Werkzeug einzusetzen, dessen Setzkopf 15 in Figur 9 verdeutlicht ist. Hier ist die Verzahnung 36 umlaufend über dem Umfang des Grunds einer Ausnehmung 37 vorgesehen, so daß sich bei Aufbringung der axialen Druckkraft auf einen hohlzylindrischen Schließring 13 mit rotationssymmetrisch verlaufenden Stirnflächen 30 und 31 diese Verzahnung im Bereich der Stirnfläche 30 in den Schließring 13 eindrückt und einformt, so daß eine ähnliche Formgebung entsteht, wie sie der obere Teil der Figur 8 zeigt.

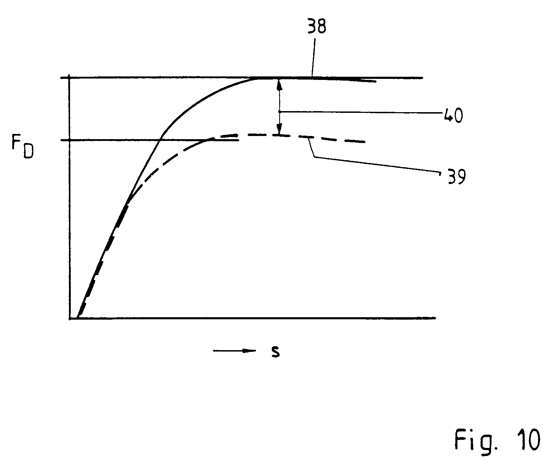

In Figur 10 ist ein Diagramm der Druckkraft Fd über dem Weg s dargestellt, um die Unterschiede zwischen dem Stand der Technik und der erfindungsgemäßen Ausbildung zu verdeutlichen. Die durchgezogene Linie 38 entspricht dem Stand der Technik bei Anwendung einer reinen Axialspannung aus einer axial gerichteten Druckkraft. Die gestrichelte Linie 39 entspricht der vorliegenden Erfindung und deutet eine reduzierte Druckkraft infolge der Überlagerung der Axialspannung und der Torsionsspannung an. Die gemäß der erfindungsgemäßen Ausbildung auf den Schließring 13 einwirkende reduzierte Druckkraft ergibt sich infolge der Differenz 40 zwischen den beiden Linien 38 und 39.

**Bezugszeichenliste:**

| | | |
|---|---|---|
| 1 | = | Bauteil |
| 2 | = | Bauteil |
| 3 | = | Bohrung |
| 4 | = | Paßniet |
| 5 | = | Kopf |
| 6 | = | Schaft |
| 7 | = | Schließteil |
| 8 | = | Vorsprung |
| 9 | = | Vertiefung |
| 10 | = | Abrißrille |
| 11 | = | Abreißteil |
| 12 | = | Rippen |
| 13 | = | Schließring |
| 14 | = | Werkzeug |
| 15 | = | Setzkopf |
| 16 | = | Zangenteil |
| 17 | = | Schrägnut |
| 18 | = | Bolzen |
| 19 | = | Pfeil |
| 20 | = | Pfeil |
| 21 | = | Gehäuse |
| 22 | = | Gewinde |
| 23 | = | Vertiefungen |
| 24 | = | Achse |
| 25 | = | Rippen |
| 26 | = | Ausnehmung |
| 27 | = | Oberfläche |
| 28 | = | Oberfläche |
| 29 | = | Rippe |
| 30 | = | Stirnfläche |
| 31 | = | Stirnfläche |
| 32 | = | Rippe |
| 33 | = | Verzahnung |
| 34 | = | Pfeil |
| 35 | = | Pfeil |
| 36 | = | Verzahnung |
| 37 | = | Ausnehmung |
| 38 | = | durchgezogene Linie |
| 39 | = | gestrichelte Linie |
| 40 | = | Differenz |

**Patentansprüche**

1. Schließring zur Erstellung einer hochbeanspruchbaren Nietverbindung, der mit einem Werkzeug auf einen Vertiefungen aufweisenden Schließteil (7) eines mit einem Abreißteil (11) versehenen Paßniets (4) unter Anwendung einer Axialspannung beim Abreißen des Abreißteils (11) aufformbar ist, im wesentlichen die Form eines Hohlzylinders aufweist und von dem beim Aufformen Material in die Vertiefungen des Schließteils (7) einfließt, dadurch gekennzeichnet, daß der Schließring (13) auf mindestens einem Teil der äußeren und/oder inneren Oberfläche (27, 28) seines Hohlzylinders und/oder im Bereich einer oder beider Stirnflächen (30, 31) Rippen (29, 32, 33) und damit eine von der Rotationssymmetrie abweichende Formgebung in der Weise besitzt, daß sich bei der Aufformung des Schließrings (13) auf den Schließteil (7) des Paßniets (4) der Axialspannung eine Torsionsspannung überlagert, so daß Material des Schließrings (13) durch das gleichzeitige Einwirken der Axialspannung und der Torsionsspannung in die Vertiefungen (9) des Schließteils (7) einfließt.

2. Schließring nach Anspruch 1, dadurch gekennzeichnet, daß die Rippen (29, 32, 33) in Form eines Steilgewindes und/oder mit asymmetrischem Querschnitt vorgesehen sind.

3. Schließring nach Anspruch 1 oder 2, dadurch gekennzeichnet, daß zwei Oberflächen (27, 28) des Schließrings mit Rippen (29, 32) versehen sind, die so angeordnet sind, daß beide induzierte Torsionsspannungen dieselbe Drehrichtung haben.

4. Schließring nach Anspruch 1 oder 2, dadurch gekennzeichnet, daß zwei Oberflächen (30, 31) des Schließrings (13) mit Rippen (33) versehen sind, die so angeordnet sind, daß beide induzierte Torsionsspannungen entgegengesetzte Drehrichtungen (34, 35) besitzen.

5. Werkzeug für das unter Anwendung einer Axialspannung beim Abreißen eines Abreißteils erfolgende Aufformen eines Schließrings auf einen Vertiefungen aufweisenden Schließteil eines Paßniets zur Erstellung einer hochbeanspruchbaren Nietverbindung, mit einem Zangenteil zum Ergreifen des Abreißteils des Paßniets und einem Setzkopf, der mit dem Schließring in Wirkverbindung tritt, dadurch gekennzeichnet, daß das Werkzeug (14) eine von der Rotationssymmetrie abweichende Formgebung in der Weise besitzt, daß der Setzkopf (15) im Schließring (13) zumindest auf einem Teil seiner Axialbewegung zum Zangenteil (16) über eine Drehbewegung zusätzlich eine Torsionsspannung induziert, so daß Material des Schließrings (13) durch das gleichzeitige Einwirken der Axialspannung und der Torsionsspannung in die Vertiefungen (9) des Schließteils (7) fließt.

6. Werkzeug nach Anspruch 5, dadurch gekennzeichnet, daß der Setzkopf (15) und der Zangenteil (16) vermittels eines Gewindes (22), einer Schrägnut (17) o. dgl. aneinander geführt sind, wobei die Steigung und die sonstigen Parameter so gewählt sind, daß keine Selbsthemmung eintritt.

7. Werkzeug nach Anspruch 5 oder 6, dadurch gekennzeichnet, daß der Setzkopf (15) in seiner Kontaktfläche zum Schließring (13) vorstehende Rippen und/oder Vertiefungen (23) aufweist.

8. Werkzeug nach Anspruch 7, dadurch gekennzeichnet, daß die Rippen und/oder Vertiefungen (23) parallel oder schräg zur Achse (24) des Setzkopfs (15) angeordnet sind.

9. Werkzeug nach einem oder mehreren der Ansprüche 5 bis 8, dadurch gekennzeichnet, daß das Werkzeug (14) einen stetig oder pulsierend einwirkenden Antrieb aufweist.

**Claims**

1. A bush (13) for producing a high-strength riveted joint, the bush to be formed around a closing part (7) having indentations, of a lockbolt rivet (4) comprising a break-off part (11) by means of a tool which applies an axial force during breaking-off the breake-off part (11), whereby the bush has substantially the shape of a hollow cylinder and when forming the bush (13), material of the bush (13) flows into the indentations (9) of the closing part (7), **characterized in that** the bush (13) has ribs (29, 32, 33) on at least a part of the outer and/or inner surface (27, 28) of its hollow cylinder and/or in the region of one or both front faces (30, 31) and thus has a shape which deviates from rotational symmetry in such a way that when forming the bush (13) on the closing part (7) of the lockbolt rivet (4), a torsional stress is superimposed on the axial tension, whereby material of the bush (13) flows into the indentations (9) of the closing part (7) due to the simultaneous action of the torsional stress and the axial tension.

2. Bush according to claim 1, **characterized in that** the ribs (29, 32, 33) are provided in the form of a coarse thread and/or with asymmetric cross-section.

3. Bush according to claim 1 or 2, **characterized in that** two surfaces (27, 28) of the bush (13) are provided with ribs (29, 32) which are arranged so that both induced torsional stresses have the same direction of rotation.

4. Bush according to claim 1 or 2, **characterized in that** two surfaces (30, 31) of the bush (13) are provided with ribs (33) which are arranged so that the two induced torsional stresses have opposing directions of rotation (34, 35).

5. Tool for carrying out the forming of a bush, during breaking-off a break-off part, on a closing part, with indentations, of a lockbolt rivet under application of an axial force, whereby said tool has a pincer section for the break-off part of the lockbolt rivet and a set-head which acts in conjunction with the bush, **characterized in that** the tool (14) has a shape which deviates from rotational symmetry in such a way that the set-head (15) by a rotational movement in addition to its axial movement towards the pincer section (16) induces torsional stress in the bush (13) during at least part of said axial movement so that material of the bush (13) flows into the indentations (9) of the closing part under the simultaneous action of the axial tension and the torsional stress.

6. Tool according to claim 5, **characterized in that** the set-head (15) and the pincer section (16) are guided onto each other by means of a thread (22), an oblique slot (17) or similar, whereby the pitch and the other parameters are selected so that no self-locking takes place.

7. Tool according to claim 5 or 6, **characterized in that** the set-head (15) has projecting ribs and/or indentations (23) on its surface which makes contact with the bush (13).

8. Tool according to claim 7, **characterized in that** the ribs and/or indentations (23) are arranged parallel or at an angle to the axis (24) of the set-head (15).

9. Tool according to one or several of the claims 5 to 8, **characterized in that** the tool (14) has a permanent or pulse-action drive.

## Revendications

1. Bague de serrage destinée à réaliser un rivetage hautement résistant qui peut être déformée au moyen d'un outil sur une partie de serrage (7), présentant des creux, d'un rivet d'ajustage (4), pourvu d'une partie arrachable (11), par application d'une contrainte axiale lors de l'arrachage de la partie (11), qui a essentiellement la forme d'un cylindre creux et de laquelle de la matière pénètre dans les creux de la partie de serrage (7), lors du formage, caractérisée en ce que la bague de serrage (13) présente des nervures (29, 32, 33), sur au moins une partie de la surface extérieure et/ou intérieure (27, 28) de son cylindre creux et/ou dans la zone de l'une ou des deux faces frontales (30, 31), et donc une forme sans symétrie de révolution en ce que lors du formage de la bague de serrage (13) sur la partie de serrage (7) du rivet d'ajustage (4) une contrainte de torsion se superpose à la contrainte axiale de sorte que de la matière de la bague de serrage (13) pénètre dans les creux (9) de la partie de serrage (7), sous l'action simultanée de la contrainte axiale et de la contrainte de torsion.

2. Bague de serrage selon la revendication 1, caractérisée en ce que les nervures (29, 32, 33) sont prévues sous la forme d'un filetage à pas rapide et/ou avec section transversale asymétrique.

3. Bague de serrage selon la revendication 1 ou 2, caractérisée en ce que deux surfaces (27, 28) de la bague de serrage sont pourvues de nervures (29, 32), qui sont disposées de manière que les deux contraintes de torsion induites ont le même sens de rotation.

4. Bague de serrage selon la revendication 1 ou 2, caractérisée en ce que deux surfaces (30, 31) de la bague de serrage (13) sont pourvues de nervures qui sont disposées de manière que les deux contraintes de torsion induites ont des sens de rotation (34, 35) opposés.

5. Outil pour le formage, consécutif à l'application d'une contrainte axiale lors de l'arrachage d'une partie arrachable d'un bague de serrage sur une partie de serrage présentant des creux d'un rivet d'ajustage destiné à réaliser un rivetage très résistant, avec une partie en pince destinée à saisir la partie arrachable du rivet d'ajustage et une tête de pose qui vient en liaison active avec la bague de serrage, caractérisé en ce que l'outil (14) présente une forme sans symétrie de révolution telle que la tête de pose (15) induit dans la bague de serrage (13), au moins sur une partie de son déplacement axial vers la partie en pince (16), par un mouvement de rotation une contrainte de torsion supplémentaire, de sorte que de la matière de la bague de serrage (13) pénètre dans les creux (9) de la partie de serrage (7), par action simultanée de la contrainte axiale et de la contrainte de torsion.

6. Outil selon la revendication 5, caractérisé en ce que la tête de pose (15) et la partie en pince (16) sont guidées l'une contre l'autre au moyen d'un filetage (22), d'une rainure oblique (17) ou similaire, la pente et les autres paramètres étant choisis de manière qu'il ne se produise aucun autoblocage.

7. Outil selon la revendication 5 ou 6, caractérisé en ce que la tête de pose (15) présente, dans sa surface de contact avec la bague de serrage (13), des nervures saillantes et/ou des creux (23).

8. Outil selon la revendication 7, caractérisé en ce que les nervures et/ou les creux (23) sont parallèles ou inclinés par rapport à l'axe (24) de la tête de pose (15).

9. Outil selon une ou plusieurs des revendications 5 à 8, caractérisé en ce que l'outil (14) présente un mécanisme d'entraînement agissant en permanence ou par impulsions.

Fig. 1

Fig. 3

Fig. 2

Fig. 4

Fig. 5

Fig. 6

Fig. 7

Fig. 8

Fig. 9

Fig. 10